# EUROPEAN PATENT SPECIFICATION

(11) **EP 1 598 605 B1**
(45) Date of publication and mention of the grant of the patent: **15.01.2014**
(21) Application number: 05101776.2
(22) Date of filing: 08.03.2005
(51) Int. Cl.: F24F 11/00

(54) **Unitary air-conditioning system and operation control method thereof**
Klimaeinheitsystem und Betriebssteuereinrichtung dafür
Système unitaire de conditionnement d'air et sa méthode de commande

(30) Priority: 21.05.2004 KR 2004036524
(43) Date of publication of application: 23.11.2005
(73) Proprietor: LG Electronics Inc., Yongdungpo-Gu Seoul (KR)
(72) Inventor: Hyun, Seung-Youp, 6-Dong, Guro-Gu, Seoul (KR); Hwang, Yoon-Jei, Yongsan-Gu, Seoul (KR); Lee, Won-Hee, Seoul (KR)
(74) Representative: Gille Hrabal

(56) References cited:
- EP-A2- 0 947 783
- US-A- 5 613 369
- US-A- 5 867 997

## Description

The present invention relates to an air-conditioning system and, more particularly, to a unitary air-conditioning system and its operation control method.

Examples of prior art air-conditioning systems are disclosed in EP 0 947 783 A2, US-A-5 867 997 and US-A-5 613 369.

In general, a unitary air-conditioning system adopts a central heating and air-conditioning system which creates cold air or hot air in one place by using an air-conditioner or a heater provided in a basement of a factory, an office, a hotel or a house and transfers and supplies the created cold air or hot air to a space to be air-conditioned or heated through a duct provided in a wall of the building.

In the unitary air-conditioning system, a zone which needs air-conditioning and a zone which needs heating are discriminated, for which a zone controller is installed in the middle of the duct in order to independently supply cold air or hot air to each zone, or a plurality of air-conditioning devices or heating devices are independently installed according to the number of zones to be air-conditioned to heated.

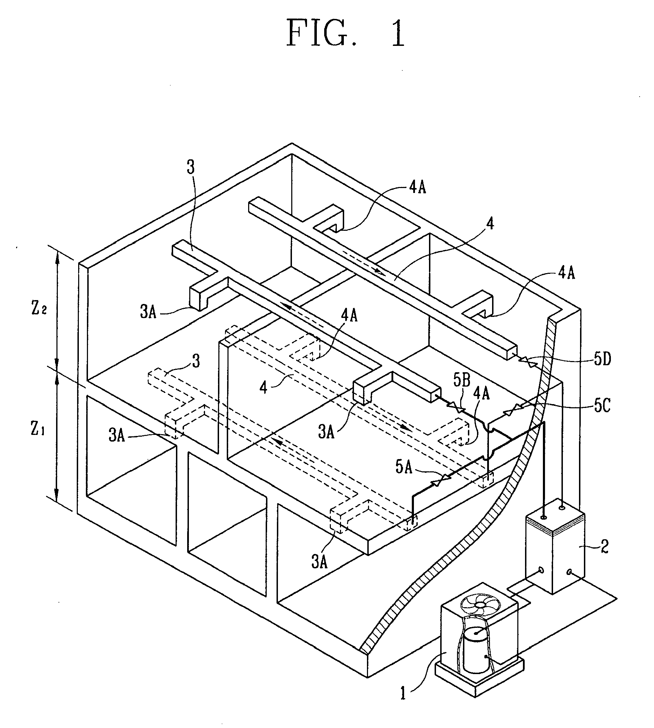

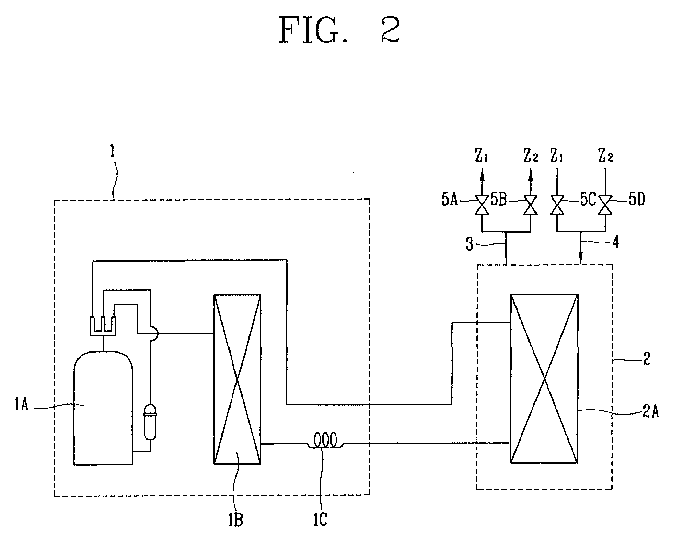

Figures 1 and 2 are schematic view and a circuit diagram showing one example of a unitary air-conditioning system in accordance with a conventional art.

As shown in Figures 1 and 2, the conventional unitary air-conditioning system includes: one outdoor unit 1 fixedly installed outside a building (a two-story house of Figure 1); an indoor heat exchanger 2A fixedly installed in a basement of the building, an outbuilding or the like and connected with an outdoor heat exchanger 1B of the outdoor unit 1 by a refrigerating pipe; a supply duct 3 and exhaust duct 4 respectively connected to an air supply opening and an air exhaust opening of an indoor unit 2 and separately embedded in the wall of each floor; and zone controllers 5A-5D installed between the supply duct 3 and exhaust duct 4 and controlling air supply to and air exhaust from each floor.

The outdoor unit 1 includes one or more compressors 1A installed inside a case of the outdoor unit 1 and compressing a refrigerant gas; the outdoor heat exchanger 1B connected with the compressors 1A by the refrigerant pipe and condensing the refrigerant gas (in case of cooling) or absorbing latent heat (in case of heating); an expansion unit 1C connected with the outdoor heat exchanger 1B and decompressing a pressure of the refrigerant gas and expanding the refrigerant gas; and an outdoor fan (not shown) for supplying external air to the outdoor heat exchanger 1B to enhance performance of heat exchanging of the outdoor heat exchanger 1B.

The indoor unit 2 includes an indoor heat exchanger 2A connected with the other end of the expanding unit 1C connected with one end of the outdoor heat exchanger 1B and an air supply fan (not shown) positioned at a lower side of the indoor heat exchanger 2A and inducing cold air or hot air to the air supply duct 3.

In the case of the indoor unit 2, a U-shaped air channel is formed to accommodate the indoor heat exchanger 2A and the air supply fan, and the supply duct 3 is connected with the air supply side of the air channel and the exhaust duct 4 is connected with the air exhaust side in the case of the indoor unit.

As mentioned above, the supply duct 3 connected with the air supply opening and the exhaust duct 4 connected with the air exhaust opening are separately embedded in the corresponding zones Z1 and Z2 to or from which cold air or hot air is supplied or exhausted. A discharge passage 3A is formed at the supply duct 3 in order to supply cold air or hot air to the corresponding zones Z1 and Z2 and a suction opening 4A is formed at the exhaust duct 4 in order to suck indoor air of the corresponding zones Z1 and Z2 to circulate indoor air.

The zone controllers 5A to 5D are a sort of valve installed in the middle of the supply duct 3 and the exhaust duct 4 embedded in the corresponding zones Z1 and Z2 and discriminately supplying cold air or hot air to the corresponding zones Z1 and Z2. The zone controllers 5A to 5D detect a temperature or humidity of the zones Z1 and Z2, compare the detected value with a pre-set value, and connected to a controller (not shown0 so as to be automatically turned on/off or manually turned on/off.

The unitary air-conditioning system constructed as described above operates as follows.

In case of a two-story house, if a size value of a load detected from each floor, the corresponding zones Z1 and Z2, is not smaller than a pre-set value, cold air or hot air is supplied to each floor through the supply duct 3 of each floor. Meanwhile, if a size value of a load of one of the corresponding zones Z1 and Z2 is not smaller than the pre-set value, cold air or hot air is supplied to the one floor through the supply duct 3 of one floor.

For example, when a unitary air-conditioning system using a heat pump type refrigerating cycle performs a cooling operation, the compressors 1A of the outdoor unit 1 are driven to compress a refrigerant gas, and the compressed refrigerant gas is condensed in the outdoor heat exchanger 1b of the outdoor unit 1 and passes through the expansion unit 1c.

Thereafter, the refrigerant gas that has passed through the expansion unit 1c takes heat out of the air sucked into the air channel to thereby change the sucked air to cold air.

The cold air is moved to the supply duct 3 through the air supply opening by the air supply fan (not shown). In this case, if the both size values of the loads of each floor (Z1 and Z2) are not smaller than the pre-set value and the zone controllers are automatically set, the zone controllers 5A to 5D are automatically turned on by the controller, while if the zone controllers are manually set, the zone controllers 5A to 5D are turned on by user's manipulation, so that the cold air is moved to each supply duct 3 and then exhausted through the discharge passage 3A formed at the supply duct to cool each floor.

Meanwhile, when the unitary air-conditioning system using the heat pump type refrigerating cycle performs a cooling operation, if only a size value of a load of one floor (Z1 or Z2) is not smaller than the pre-set value, only a zone controller of a floor where the size value of the load is not smaller than the pre-set value is automatically or manually opened. Accordingly, the cold air is moved only to the supply duct 3 of the floor where the size value of the load is not smaller than the pre-set value and then discharged through the discharge passage 3A formed at the supply duct, thereby cooling only the floor where the size value of the load is not smaller than the pre-set value.

When the unitary air-conditioning system performs a heating operation, it operates in the same manner except that the circulation of the refrigerant is made in the reverse order according to the heat pump type refrigerating cycle.

In the conventional unitary air-conditioning system, a thermostat positioned in a room controls the indoor unit and the outdoor unit based only on detected set temperature and room temperature values inputted by a user. Namely, the indoor fan and outdoor fan are rotated and the compressors are operated depending on the information calculated based only on the set temperature and the room temperature values.

Thus, since the indoor unit and the outdoor unit are controlled based only on the values detected by the thermostat, they fail to consider an influence of the temperature of the air introduced into the indoor heat exchanger and the temperature of the indoor heat exchanger, and thus, the operation of the indoor unit and the outdoor unit are not controlled in the optimum state and capability for coping with the load is relatively degraded.

In addition, if manufacturers of the indoor unit and the outdoor unit are different, the temperature of air introduced to the indoor heat exchanger and the temperature of the indoor heat exchanger cannot be used to control the outdoor unit.

The object of the present invention is to enable to control operation of the indoor heat exchanging unit and of the outdoor heat exchanging unit of unitary air-conditioning in an optimum state and to cope with the operation of the entire air-conditioning system.

To achieve these and other advantages and in accordance with the purpose of the present invention a unitary air-conditioning system is provided which comprises the features of claim 1.

Further features and advantages of this system are subject matter of the claims dependent to claim 1.

To achieve the above object and advantages the present invention also provides a method for controlling the operation of the unitary air-conditioning system with a method comprising the features of claim 8.

Further features and advantages of this method are subject matter of the claims dependent to claim 8.

According to the present invention is provided a unitary air-conditioning system and its control method for operating and controlling an indoor unit and an outdoor unit by wirelessly transmitting information on the temperature of an indoor heat exchanger and the temperature of air introduced into the indoor heat exchanger as well as information detected from a thermostat of the indoor unit to the outdoor unit to thereby control the outdoor unit even if the indoor unit and the outdoor unit are manufactured by different manufacturers.

In accordance with the purpose of the present invention, as embodied and broadly described herein, there is provided a unitary air-conditioning system including: a thermostat for detecting a set temperature inputted by a user and the room temperature; a temperature detecting unit for detecting a first temperature of an indoor heat exchanger and a second temperature of air introduced into the indoor heat exchanger; a first controller for receiving information on the set temperature, the room temperature, the first temperature and the second temperature, and converting information on the inputted set temperature, the room temperature and the first and second temperatures into a communication signal; a first communicating unit for receiving the converted communication signal and transmitting it; a second communicating unit for receiving the communication signal from the first communicating unit; and a second controller for controlling operation of compressors based on the communication signal received from the second communicating unit.

The foregoing and other objects, features, aspects and advantages of the present invention will become more apparent from the following detailed description of the present invention when taken in conjunction with the accompanying drawings.

The accompanying drawings, which are included to provide a further understanding of the invention and are incorporated in and constitute a part of this specification, illustrate embodiments of the invention and together with the description serve to explain the principles of the invention.

In the drawings:
Figure 1 is a schematic view showing a unitary air-conditioning system in accordance with a conventional art;
Figure 2 is a circuit diagram of the unitary air-conditioning system in accordance with the conventional art;
Figure 3 is a block diagram showing the construction of a unitary air-conditioning system in accordance with the present invention;
Figure 4 is a flow chart of a method for controlling the unitary air-conditioning system in accordance with the present invention; and
Figure 5 is a block diagram showing another example of the unitary air-conditioning system in accordance with the present invention.

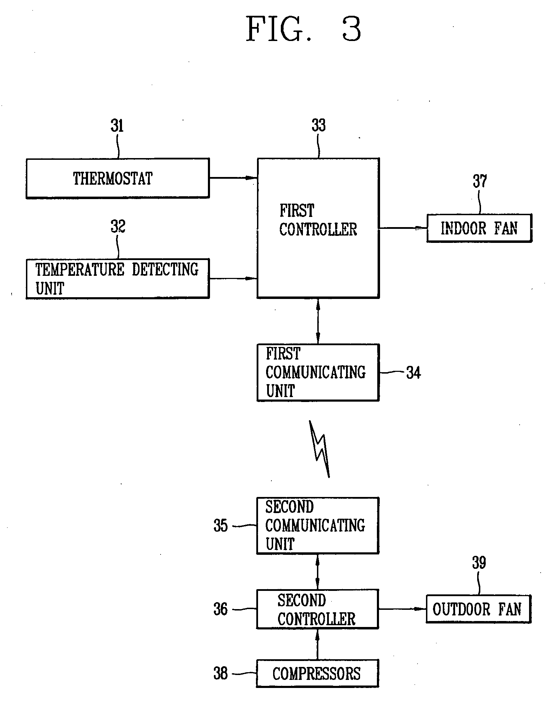

A unitary air-conditioning system and its control method for operating and controlling an indoor unit and an outdoor unit by controlling the outdoor unit based on information on a temperature of an indoor heat exchanger and a temperature of air introduced into the indoor heat exchanger as well as information detected from a thermostat of the indoor unit even if the indoor unit and the outdoor unit are manufactured by different manufacturers, in accordance with preferred embodiments of the present invention will now be described with reference to Figures 3 to 5.

As shown in Figure 3, the unitary air-conditioning system includes a thermostat 31 for detecting a set temperature inputted by a user and a room temperature; a temperature detecting unit 32 for detecting a first temperature of an indoor heat exchanger and a second temperature of air introduced into the indoor heat exchanger; a first controller for receiving information on the set temperature, the room temperature, the first temperature and the second temperature, and converting information on the inputted set temperature, the room temperature and the first and second temperatures into a communication signal; a first communicating unit 34 for receiving the converted communication signal and transmitting it; a second communicating unit 35 for receiving the communication signal from the first communicating unit; and a second controller 36 for controlling an operation of compressors based on the communication signal received from the second communicating unit.

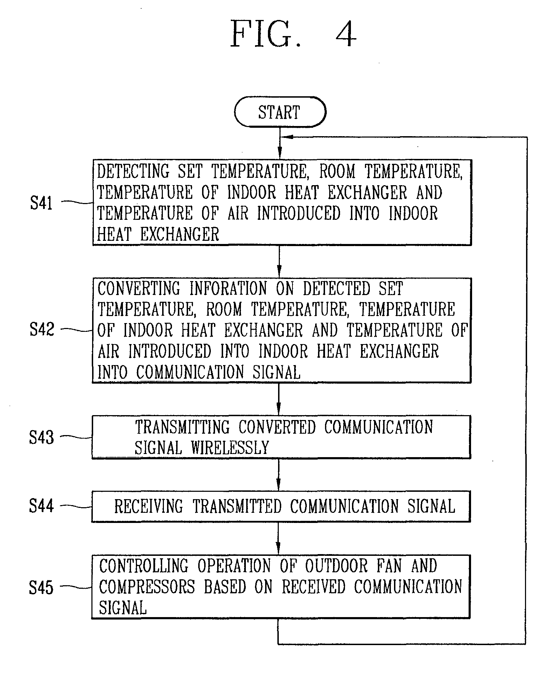

A method for controlling an operation of the unitary air-conditioning system in accordance with the present invention will now be described with reference to Figure 4.

As shown in Figure 4, the method for controlling the unitary air-conditioning system includes: detecting a set temperature inputted by a user, a room temperature, a first temperature of the indoor heat exchanger, and a second temperature of air introduced into the indoor heat exchanger (step S41); converting the information on the detected set temperature, the room temperature, and the first and second temperatures into a communication signal (step S42); transmitting the converted communication signal wirelessly (step S43); receiving the transmitted communication signal (step S44); and controlling an operation of compressors based on the received communication signal (step S45).

The method for controlling an operation of the unitary air-conditioning system will be described in detail as follows.

First, the thermostat 31 installed in a room detects a set temperature inputted by a user and a room temperature, and information on the detected set temperature and room temperature to the first controller 33.

The temperature detecting unit 32 detects a first temperature of the indoor heat exchanger and a second temperature of air introduced into the indoor heat exchanger, and applies the first and second temperatures to the first controller 33 (step S41).

The thermostat 31 is installed in a room, and the temperature detecting unit 32 and the first controller 33 are installed in the indoor unit. In general, the indoor unit is fixedly installed in a basement or the like. Thus, a temperature of air introduced into the indoor heat exchanger is equal to the temperature of air around the indoor air.

Accordingly, the first controller 33 is installed at a certain position of the indoor unit and converts the information on the set temperature, the room temperature and the first and second temperatures into a communication signal (step S42). In addition, the first controller 33 controls an operation of the indoor fan based on the set temperature, the room temperature and the first and second temperatures.

The first communicating unit 34 transmits the converted communication signal to the second communicating unit 35 wirelessly (step S43). Herein, the first communicating unit 34 converts the information on the set temperature, the room temperature and the first and second temperatures into an RF signal, and transmits the converted RF signal.

The first communicating unit 34 is attached to a unit, for example, a gas furnace or an air handling unit, inside the indoor unit. The first communicating unit 34 can transmit the converted communication signal to the second communicating unit 34 through a cable.

The second communicating unit 35 receives the transmitted communication signal, inverts the converted communication signal, and applies the inverted communication signal to the second controller 36 (step S44).

The second controller 36 receives the inverted communication signal from the second communicating unit 35 and controls an operation of the compressors 38 and the outdoor fan 39 based on the received communication signal (step S45). Herein, output capacity of the outdoor unit is determined according to the operation of the compressors 38 and the outdoor fan 39.

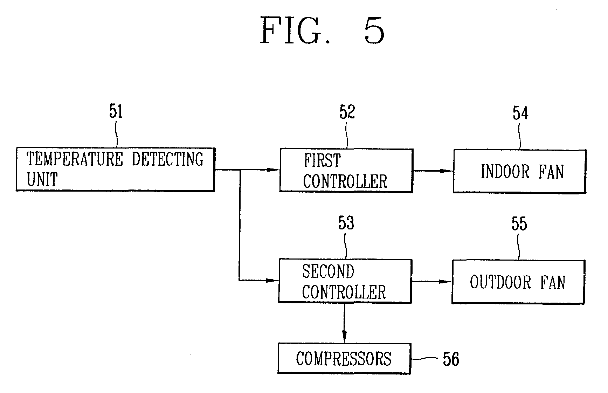

Another embodiment of the unitary air-conditioning system in accordance with the present invention will be described with reference to Figure 5 as follows.

As shown in Figure 5, the unitary air-conditioning system in accordance with another embodiment of the present invention includes a temperature detecting unit 51 for detecting a set temperature inputted by a user, a room temperature, a first temperature of the indoor heat exchanger and a second temperature of air introduced into the indoor heat exchanger; a first controller for controlling an operation of the outdoor fan 55 and compressors 56 determining output capacity of the outdoor unit based on the set temperature, the room temperature and the first and second temperatures; and a second controller 53 for controlling an operation of the indoor fan 54 based on the set temperature and the room temperature.

The unitary air-conditioning system in accordance with another embodiment of the present invention operates as follows.

The temperature detecting unit 51 detects the set temperature inputted by the user, the room temperature, the temperature of the indoor heat exchanger and the temperature of air introduced into the indoor heat exchanger, and then, applies information on the detected temperatures to the first and second controllers 52 and 53.

The first controller 52 determines output capacity of the outdoor unit by controlling the operation of outdoor fan and the compressor based on the applied information on the temperatures.

The second controller 53 controls the operation of the indoor fan based on the applied information on the set temperature and the room temperature, and also can control the operation of the indoor fan 54 based on the set temperature, the room temperature and the first and second temperatures.

As so far described, the unitary air-conditioning system in accordance with the present invention has the following advantages.

That is, since the information detected from the thermostat and the information on the temperature of air introduced into the indoor heat exchanger and the temperature of the indoor heat exchanger are wirelessly transmitted to the outdoor unit, even if the indoor unit and the outdoor unit are made separately from different manufacturers, the outdoor unit can be controlled based on the temperature of the indoor heat exchanger and the temperature of air introduced into the indoor heat exchanger as well as the information detected from the thermostat. Thus, the operation of the indoor unit and the outdoor unit can be controlled in an optimum state.

## Claims

1. Unitary air-conditioning system, comprising
a thermostat (31) for detecting a set temperature inputted by a user and a room temperature of a space, where cold air or hot air created by the unitary system is supplied through a duct;
a temperature detecting unit (32; 51) for detecting a first temperature of an indoor heat exchanger and a second temperature of air introduced into this indoor heat exchanger; and that
the second temperature is equal to the temperature of air around an Indoor unit;
a first controller (33; 52) for receiving information on the set temperature, the room temperature, the first temperature and the second temperature from the temperature detecting unit and for converting this information into a RF-communication signal, a first communicating unit (34) for transmitting the RF-communication signal to a second communication unit (35);
a second communication unit (35) for receiving the RF-communication signal from the first communicating unit; and
a second controller (36) for controlling operation of the compressors (38; 56) based on the communication signal received by the second communicating unit.

2. System of claim 1, **characterized in that** the first controller (33; 52) controls the operation of an indoor fan (37; 54) based on the information on the inputted set temperature and the room temperature.

3. The system of claim 1, **characterized in that** the first controller (33; 52) controls the operation of the indoor fan (37; 54) based on the information on the inputted set temperature, indoor temperature and first and second temperatures.

4. System of any one of claims 1 to 3, **characterized in** the second controller (33; 36) for controlling operation of an outdoor fan (39; 55) and compressors (38; 56) based on the first and second temperatures.

5. System of claim 4, **characterized in that** operation of an indoor fan (37; 54) Is controlled based on the set temperature and the room temperature.

6. System of claim 4, **characterized in that** operation of an indoor fan (37; 54) is controlled based on the set temperature, the room temperature and the first and second temperatures.

7. Method for controlling operation of a unitary air-conditioning system, comprising:
detecting with a thermostat set temperature inputted by a user, a room temperature of a space, where cold air or hot air created by the unitary air-conditioning system is supplied through a duct;
further detecting a first temperature of an indoor heat exchanger and a second temperature of air introduced into the indoor heat exchanger; and that the second temperature is equal to the temperature of air around an indoor unit;
converting the information on the set temperature, the room temperature, the first temperature, and the second temperature into a communication signal;
transmitting the converted communication signal wirelessly;
receiving the transmitted communication signal; and
controlling operation of compressors (38; 56) based on the received communication signal.

8. Method of claim 7, **characterized in that** in the transmitting step, the converted communication signal is converted into an RF signal and then transmitted.

9. Method of claim 7 or 8, **characterized in that** operation of an indoor fan is controlled based on the detected set temperature, the room temperature and the first and second temperatures.

10. Method of claim 7 or 8, **characterized in that** operation of an outdoor fan is controlled based on the received communication signal.

## Patentansprüche

1. Klimaeinheitssystem umfassend
einen Thermostat (31) zum Nachweis einer von einem Anwender eingegebenen Einstellungstemperatur und einer Raumtemperatur eines Raums, wo kalte oder heiße Luft, die von dem Klimaeinheitssystem erzeugt wurde, durch eine Leitung zugeführt wird;
eine Temperatur-Nachweiseinheit (32 ; 51) zum Nachweis einer ersten Temperatur eines Innenraum-Wärmeaustauschers und einer zweiten Temperatur von in diesem Innenraum-Wärmeaustauscher eingeleiteter Luft; und dass
die zweite Temperatur gleich der Temperatur von Luft um eine Innenraumeinheit ist;
eine erste Steuerung (33 ; 52) zur Aufnahme von Informationen über die eingestellte Temperatur, die Raumtemperatur, die erste Temperatur und die zweite Temperatur der Temperatur-Nachweiseinheit und zur Umwandlung dieser Information in ein RF-Kommunikationssignal, eine erste Kommunikationseinheit (34) zur Übertragung des RF-Kommunikationssignals an eine zweite Kommunikationseinheit (35) ;
eine zweiten Kommunikationseinheit (35) zum Empfang des RF-Kommunikationssignals von der ersten Kommunikationseinheit; und
eine zweite Steuerung (36) zur Steuerung des Betriebs der Kompressoren (38; 56) auf der Basis des von der zweiten Kommunikationseinheit empfangenen Kommunikationssignals.

2. System nach Anspruch 1, **dadurch gekennzeichnet, dass** die erste Steuerung (33; 52) den Betrieb eines Innenventilators (37; 54) auf der Grundlage von Information über die eingegebene Einstellungstemperatur und die Raumtemperatur steuert.

3. System nach Anspruch 1, **dadurch gekennzeichnet, dass** die erste Steuerung (33; 52) den Betrieb eines Innenventilators (37; 54) auf der Grundlage von Informationen über die eingegebene Einstellungstemperatur, die Innenraum-Temperatur und die ersten und zweiten Temperaturen steuert.

4. System nach einem der Ansprüche 1 bis 3, **gekennzeichnet durch** die zweite Steuerung (33; 36) zur Steuerung des Betriebs eines Außenventilators (39; 55) und Kompressoren (38; 56) auf der Grundlage der ersten und zweiten Temperaturen.

5. System nach Anspruch 4, **dadurch gekennzeichnet, dass** der Betrieb eines Innenventilators (37; 54) auf der Grundlage der Einstellungstemperatur und der Raumtemperatur gesteuert wird.

6. System nach Anspruch 4, **dadurch gekennzeichnet, dass** der Betrieb eines Innenventilators (37; 54) auf der Grundlage der Einstellungstemperatur, der Raumtemperatur und der ersten und zweiten Temperaturen gesteuert wird.

7. Verfahren zur Steuerung eines Klimaeinheitssystems umfassend:
Nachweisen mit einem Thermostat einer von einem Anwender eingegebenen Einstellungstemperatur und einer Raumtemperatur eines Raums, wo kalte oder heiße Luft, die von dem Klimaeinheitssystem erzeugt wurde, durch eine Leitung zugeführt wird;
weiterhin Nachweisen einer ersten Temperatur eines Innenraum-Wärmeaustauschers und einer zweiten Temperatur von in diesem Innenraum-Wärmeaustauscher eingeleiteter Luft; und dass die zweite Temperatur gleich der Temperatur von Luft um eine Innenraumeinheit ist;
Umwandeln der Information über die Einstellungstemperatur, die Raumtemperatur, die erste Temperatur und die zweite Temperatur in ein Kommunikationssignal;
drahtloses Übertragen des Kommunikationssignals; Empfang des übertragenen Kommunikationssignals; und
Steuern des Betriebs von Kompressoren (38 ; 56) auf der Basis des empfangenen Kommunikationssignals.

8. Verfahren nach Anspruch 7, **dadurch gekennzeichnet, dass** in dem Übertragungsschritt das umgewandelte Kommunikationssignal in ein RF-Signal umgewandelt und anschließend übertragen wird.

9. Verfahren nach Anspruch 7 oder 8, **dadurch gekennzeichnet, dass** der Betrieb des Innenventilators auf der Basis der Einstellungstemperatur, der Raumtemperatur und der ersten und zweiten Temperatur gesteuert wird.

10. Verfahren nach Anspruch 7 oder 8, **dadurch gekennzeichnet, dass** der Betrieb des Außenventilators auf der Basis des empfangenen Kommunikationssignals gesteuert wird.

## Revendications

1. Système unitaire de conditionnement d'air comprenant
un thermostat (31) pour la détection d'une température réglée saisie par un utilisateur et d'une température ambiante d'un espace où de l'air froide ou de l'air chaude générée par le système unitaire de conditionnement est fournie à travers un conduit ;
une unité de détection de température (32 ; 51) pour la détection d'une première température d'un échangeur de chaleur d'interieur et d'une deuxième température d'air introduite dans cet echangeur de chaleur d'interieur ; et que
la deuxième température est égale à la température d'air autour d'une unité d'intérieur ;
un premier contrôleur (33 ; 52) pour la réception des informations sur la température réglée, la température ambiante, la première température et la deuxième température de l'unité de détection de température et pour la transformation de cette information en un signal RF de communication, un première unité de communication (34) pour la diffusion du signal RF de communication à une deuxième unité de communication (35) ;
une deuxième unité de communication (35) pour la réception du signal RF de communication de la première unité de communication ; et
un deuxième contrôleur (36) pour le contrôle de l'opération des compresseurs (38 56) à base du signal de communication reçu par la deuxième unité de communication.

2. Système selon la revendication 1, **caractérisé par le fait que** le premier contrôleur (33 ; 52) contrôle l'opération d'un ventilateur d'intérieur (37 ; 54) à base de l'information sur la température réglée saisie et la température ambiante.

3. Système selon la revendication 1, **caractérisé par le fait que** le premier contrôleur (33 ; 52) contrôle l'opération du ventilateur d'intérieur (37 ; 54) à base de l'information sur la température réglée saisie, la température d'intérieur et les premières et deuxièmes températures.

4. Système selon l'une des revendications 1 à 3, **caractérisé par** le deuxième contrôleur (33 ; 36) pour le contrôle de l'opération d'un ventilateur d'extérieur (39 ; 55) et des compresseurs (38; 56) à base des premières et deuxièmes températures.

5. Système selon la revendication 4, **caractérisé par le fait que** l'opération d'un ventilateur d'intérieur (37 ; 54) est contrôlée à base de la température réglée et la température ambiante.

6. Système selon la revendication 4, **caractérisé par le fait que** l'opération d'un ventilateur d'intérieur (37 ; 54) est contrôlée à base de la température réglée, la température ambiante et les premières et deuxièmes températures.

7. Méthode de contrôle de l'opération d'un système unitaire de conditionnement d'air
comprenant :
la détection avec un thermostat d'une température réglée saisie par un utilisateur, une température ambiante d'un espace où de l'air froide ou de l'air chaude générée par le système unitaire de conditionnement est fournie à travers un conduit ;
de plus la détection d'une première température d'un échangeur de chaleur d'intérieur et d'une deuxième température d'air introduite dans l'échangeur de chaleur d'intérieur ; et que la deuxième température est égale à la température d'air autour d'une unité d'intérieur ;
la transformation de l'information sur la température réglée, la température ambiante, la première température et la deuxième température en un signal de communication ;
la diffusion du signal de communication sans fil ;
la réception du signal de communication diffusé ; et
le contrôle de l'opération des compresseurs (38 ; 56) basé sur le signal de communication reçu.

8. Méthode selon la revendication 7, **caractérisé par le fait que** dans l'étape de diffusion, le signal de communication transformé est transformé en un signal RF est ensuite est diffusé.

9. Méthode selon la revendication 7 ou 8, **caractérisé par le fait que** l'opération d'un ventilateur d'intérieur est contrôlée à base de la température réglée, la température ambiante et les premières et deuxièmes températures.

10. Méthode selon la revendication 7 ou 8, **caractérisé par le fait que** l'opération d'un ventilateur d'extérieur est contrôlée à base du signal de communication reçu
